(19) **Europäisches Patentamt**
**European Patent Office**
**Office européen des brevets**

(11) **EP 4 559 320 A1**

(12) **EUROPEAN PATENT APPLICATION**

(43) Date of publication:
28.05.2025 Bulletin 2025/22

(51) International Patent Classification (IPC):
*A23J 1/14* (2006.01)    *A23J 3/14* (2006.01)
*A23J 3/18* (2006.01)    *A23J 3/30* (2006.01)

(21) Application number: 24165045.6

(22) Date of filing: 21.03.2024

(52) Cooperative Patent Classification (CPC):
**A23J 1/14; A23J 3/14; A23J 3/18; A23J 3/30**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 27.11.2023 EP 23307062

(71) Applicant: **ROQUETTE FRERES**
**62136 Lestrem (FR)**

(72) Inventors:
• **Muller, Elsa**
**62136 LESTREM (FR)**
• **Morcet, Adeline**
**62136 LESTREM (FR)**

(74) Representative: **Plasseraud IP**
**104 Rue de Richelieu**
**CS92104**
**75080 Paris Cedex 02 (FR)**

(54) **PROTEIN BAR WITH IMPROVED STABILITY**

(57)    The invention pertains to a solid protein raw dough product, the dough of the product comprising a pea protein hydrolysate and a plant protein component chosen from plant protein isolate, plant protein concentrate and blends thereof, the dry weight of pea protein hydrolysate on the total dry weight of pea protein hydrolysate and plant protein of the dough going from 10% to 80%.

**Description**

**FIELD OF THE INVENTION**

The present invention pertains to a protein raw dough product comprising a pea protein hydrolysate, a plant protein isolate and/or plant protein concentrate. This invention also pertains to the use of pea protein hydrolysate to improve the properties of protein raw dough product, by stabilizing the hardening of a raw dough food product during time.

**BACKGROUND OF THE INVENTION**

High protein bars (or high protein raw bars) which generally include proteins with sweeteners usually in the form of syrups, such as glucose syrups, are currently available on the market. These products are solid and soft which makes them easy to consume. The protein dough of this kind of bars is manufactured without any cooking step, so that it is considered as "raw". These raw bars are popular among individuals who are on a diet, seek nutritional supplements for sports or bodybuilding, but these bars are also more and more popular products as snacks for people on the go. They generally contain the dough bar, with or without inclusions, sometimes a caramel coating, and often a chocolate or compound chocolate coating. Other kind of raw dough products are protein raw bites. These are similar to protein bars in their composition but differ in the shape of the product.

However, these protein raw dough products have some drawbacks in terms of texture. For example, it has been observed that these bars tend to harden during storage, which reduces their shelf life. One solution consists in adding glycerine to the bar formulation in order to prevent water migration. However, glycerine results in flavour modification which may not be acceptable. In WO2015/094342 A1 is described protein raw dough products with improved hydration rate and decreased hardening rate using native proteins and sweetener, in which the sweetener is allulose sweetener. Besides, the targeted protein content in these raw dough products can be very high so that it limits the amount of other ingredients that can be used in the recipe.

For protein raw dough product based on whey proteins, it has also been suggested for instance in US-7,399,496, to use whey protein hydrolysates instead of unhydrolyzed whey proteins. In US20210177030 A1, collagen protein hydrolysates are also used in whey protein-based bars and have the function to make the whey protein bars more moldable. Although they provide some benefits, these animal-based proteins are not always well perceived by consumers, who are more and more reluctant to use animal-based ingredients and would rather use instead plant-based food ingredients.

Vegetarians or vegan consumers are also eagerly interested in having products with good texture and taste that do not comprise animal-based products. Indeed, it is still difficult to find plant protein bars with good texture and taste that comprise a high content of protein (e.g., 25% or higher). Plant protein bars (vegan) "Vegan Protein Bar Extra Layered" comprising 23 g of protein per 100 g of product have already been commercialized under the trademark Foodspring®; however, this protein bar does not comprise any plant protein isolate and/or concentrate and the content of protein is still low.

It would be advantageous to provide another solution to the problems of fast hardening of dough bars containing plant proteins and to provide raw dough protein products based on plant proteins that have good texture and taste.

After extensive research, it has been shown by the inventors that the use of a dough comprising pea protein hydrolysate in combination with plant protein isolate and/or concentrate gives protein bars which have an acceptable hardness and do not become excessively hard over time. Interestingly, the protein bar has good taste and texture, and this even when the level of protein in the bar is high, e.g. is 25% or above, or even 30% or above. To the inventors' knowledge, it has not been suggested in the prior art to use pea protein hydrolysate in combination with plant protein isolate and/or concentrate to manufacture protein dough bars.

The invention will be described shortly below.

**SUMMARY OF THE INVENTION**

The invention pertains to a solid protein raw dough product wherein the dough of the product comprises a pea protein hydrolysate and a plant protein component chosen from plant protein isolates, plant protein concentrates and blends thereof, and in which the dry weight of pea protein hydrolysate on the total dry weight of pea protein hydrolysate and plant protein component of the dough going from 10% to 80%.

The solid protein raw dough product of the invention has different advantages including a better texture when eaten, stability in the texture during time and is easy to prepare and to shape in any kind of protein raw dough manufacturing process thanks to the texture of the dough.

Thus, one other aspect of the invention is a process of manufacturing the solid protein raw dough food product of the invention that comprises the steps of:

- mixing the pea protein hydrolysate and the plant protein component with an aqueous solution until a dough is obtained;
- laminating the dough;
- shaping the laminated dough.

One other aspect of the invention is the use of a pea protein hydrolysate to improve the cohesion of a raw dough comprising a plant protein component chosen from plant protein isolates, plant protein concentrates and blends thereof.

**DETAILED DESCRIPTION OF THE FIGURES**

Figure 1 represents the aspect of a raw dough that does not comprise any pea protein hydrolysate.
Figure 2 represents the aspect of a rolled raw dough that comprises pea protein hydrolysate.
Figure 3 represents the aspect of a rolled raw dough that comprises another sort of pea protein hydrolysate.
Figure 4 represents the evolution of hardness of the rolled raw doughs that comprise pea protein hydrolysates.

The invention will now be described below into details.

**DETAILED DESCRIPTION OF THE INVENTION**

The invention is a solid protein raw dough product.

"Solid protein raw dough product" in the context of the invention means a shaped product, such as a protein bar or protein bite, wherein at least a portion of the product consists in a raw dough. The raw dough may further be in contact with inclusions, into or on top of the raw dough. The solid protein raw dough product may also further contain a coating of one or several layers on top of the raw dough and/or on top of the inclusions. The solid protein raw dough product consists in the finished product comprising the raw dough and optional coating and/or inclusions. Inclusions and coating are described below in the description.

"Raw dough" in the context of the invention means a dough in which the proteins and other ingredients are homogeneously dispersed in a cohesive manner. It is preferred that the dough is non-sticky, smooth at the surface with a nice softness. It is generally manufactured without any cooking step.

The dough comprises a pea protein hydrolysate. Pea protein hydrolysates are generally obtained by chemical or enzymatic hydrolysis of a pea protein. This pea protein is generally a pea protein isolate. Preferably, the pea protein hydrolysate is an enzymatically hydrolysed pea protein. In the context of the invention, the pea protein hydrolysate may be obtained by any kind of enzyme that cleaves pea protein, including endoproteases, exoproteases, peptidases and the like. The degree of hydrolysis of a protein is representative of the length of the amino-acids chains in the protein. The DH is known by the skilled person in the art and different methods exist to determine it. In the invention, the degree of hydrolysis DH can be determined using the following equation:

$$DH = \frac{\text{Amino nitrogen (\%)} \times 100}{\text{Protein nitrogen (\%)}}$$

in which the protein nitrogen is determined according to the DUMAS method according to standard ISO 16634. The amino nitrogen can be determined using the MEGAZYME kit (reference K-PANOPA).

Pea protein hydrolysates available on the market include NUTRALYS® H85 commercialized by Roquette Frères or PEPTIPEA® commercialized by TRIBALLAT.

Preferably, the pea protein hydrolysate has a degree of hydrolysis DH that goes from 5 to 25, advantageously from 11 to 22, preferably from 14 to 20.

The dough further comprises a protein component chosen from plant protein isolates, plant protein concentrates and blends thereof. Preferably, the plant protein component is a plant protein isolate or a blend of plant protein isolates.

Plant protein isolates generally have a protein N6.25 content based on the total dry weight of the protein isolate that is 80% or higher and are generally extracted by wet methods of isolation, that often include an isoelectric precipitation step. Plant protein concentrates have a protein N6.25 content lower than 80%, generally going from 55% to 70% and are generally manufactured by dry fractionation of flours. Besides protein, the plant protein concentrates or isolates also comprise components inherently present in the plant (generally carbohydrates, lipids and minerals) that are not eliminated during isolation or concentration process. According to the invention, the plant protein component may be a plant protein isolate or a blend of plant protein isolates, a plant protein concentrate or a blend of plant protein concentrates or a blend of plant protein isolate(s) and plant protein concentrate(s).

The term "plant protein" denotes all the proteins derived from cereals, oleaginous plants, leguminous plants and tuberous plants, and also all the proteins derived from algae and microalgae or fungi, used alone or as a mixture, chosen from the same family or from different families. Leguminous plants can be for instance pea, fava bean, mung bean, lentil, alfalfa, or lupin bean. As example, pea protein isolates are commercialized by the applicant under the trademark NUTRALYS®. In the present application, the term "cereals" is intended to mean cultivated plants of the grass family producing edible grains, for instance wheat, rye, barley, maize, sorghum or rice. The cereals are often milled in the form of flour, but are also provided in the form of grains and sometimes in wholeplant form (fodders) . Gluten can be cited as example of wheat protein. NUTRALYS® RICE I800XF and NUTRALYS® RICE I850XF, which are rice protein isolates commercialized by the Applicant, can be cited as examples of rice protein. In the present application, the term "tubers" is intended to mean all the storage organs, which are generally underground, which ensure the survival of the plants during the winter season and often their multiplication via the vegetative process. These organs are bulbous owing to the accumulation of storage substances. The organs transformed into tubers can be the root e.g. carrot, parsnip, cassava, konjac), the rhizome (e.g. potato, Jerusalem artichoke, Japanese artichoke, sweet potato), the base of the stalk (more specifically the hypocotyl, e.g. kohlrabi, celeriac), the root and hypocotyl combination (e.g. beetroot, radish). Preferably, the plant of the plant protein component is chosen from pea, fava bean, soybean and rice, preferably pea.

In a preferred embodiment, the plant protein component comprises at least one soluble plant protein isolate or concentrate and at least one insoluble plant protein isolate or concentrate, the soluble plant protein having a solubility at pH 7 higher than 25%, for example from 40 to 80%, the insoluble plant protein having a solubility at pH 7 lower than 25%, for example from 10 to 20%. It has been observed by inventors that, when associating one plant protein being insoluble with plant protein being soluble, the texture of the dough is even more improved than when the dough did comprise only soluble plant proteins (which led to a dough that hardened over time) or only insoluble plant proteins (which led to a crumbly texture). Preferably, the total dry weight of soluble plant protein isolate or concentrate goes from 30% to 90% of the total dry weight of the plant protein component, for example from 50 to 80%, preferably from 50 to 70% or from 30 to 70% or from 50 to 65%. Insoluble plant protein that can be cited are commercial products such as NUTRALYS® PEA B85F (pea protein), NUTRALYS® RICE I800XF or NUTRALYS® RICE I850XF (rice proteins). As examples of soluble plant proteins can be cited commercial products such as NUTRALYS® PEA S85F or NUTRALYS® PEA S85XF (pea proteins).

Solubility at pH 7 of the plant protein is determined by diluting the sample to analyse in distilled water, centrifuging it and analysing the supernatant. The solubility analysis may consist in the following test:

- Introducing 150 g of distilled water at a temperature of 20° C.±2° C. into a 400 ml beaker, mix with a magnetic bar and add precisely 5 g of the test sample;
- Adjusting the pH at 7, if necessary, to the desired value with 0.1 N NaOH or 0.1 N HCl;
- Making up the content with water to 200 g;
- Mixing for 30 minutes at 1000 rpm and centrifuge for 15 minutes at 3000 g;
- Collecting 25 g of the supernatant;
- Introducing into a predried and tared crystallizing dish;
- Placing in an oven at 103° C.±2° C. for 1 hour;
- Next, placing in a desiccator (with dehydrating agent) to cool to room temperature, and weigh.

The solubility is the content of soluble solids, expressed as a weight percentage, and is given by the following formula:

$$\text{Solubility (\%)} = (m1-m2) \times (200+P) \times 100 \,/\, (P1 \times P)$$

in which:

- weight, in g, of the sample=5 g
- m1=weight, in g, of the crystallizing dish after drying
- m2=weight, in g, of the empty crystallizing dish
- P1=weight, in g, of the sample collected=25 g.

The dry weight of pea protein hydrolysate on the total dry weight of pea protein hydrolysate and plant protein component of the dough goes from 10% to 80%, advantageously from 10% to 60%, preferably from 15% to 50% or 15% to 35%.

The dough can generally comprise additional ingredients that will bring to the bar other nutritional, texture, or taste benefits. The dough can further comprise at least one ingredient chosen from:

- sugars in dry form or in the form of a syrup such as sucrose, glucose, maltose, fructose, allulose, isomaltulose or agave
- polyol in dry form or in the form of a syrup such as sorbitol, maltitol, glycerine, xylitol, isomalt or erythritol
- dietary fibers in dry form or in the form of a syrup, such as resistant maltodextrin, soluble corn fiber, isomalto-oligosaccharides, oligofructose, inulin, fructans or polydextrose
- intense sweeteners such as Stevia, sucralose, acesulfame K, aspartame,
- plant oil or plant fat such as cocoa butter, peanut butter, coconut oil, MCT oil, sunflower or rapeseed oil,
- emulsifiers such as lecithin or and mono- and diglycerides,
- maltodextrins,
- salt,
- flavours such as vanilla flavour, caramel flavour, or chocolate flavour
- colouring agents,
- vitamins,
- minerals,
- added Amino Acid Ingredients such as branched-chain amino acids,
- cocoa powder.

The quantities can be easily selected and adapted by the skilled person. Based on its total dry weight, dough can comprise on a dry basis from 0 to 50%, 2 to 45% or 5 to 35% of sugar ingredients, from 0 to 50%, 2 to 35% or 5 to 25% of polyol ingredients, from 0 to 35% or 5 to 25% of dietary fiber ingredients, from 0 to 1% of intense sweetener, from 0 to 35% or 5 to 25% of plant oil and fat, from 0 to 2% of emulsifier, from 0 to 25% or 5 to 15% of maltodextrins, from 0 to 30% or 5 to 20% of cocoa powder, from 0 to 2% or 0,1 to 1% of flavours, from 0 to 1% of colouring agents, 0 to 5% of amino acids ingredients.

Preferably, based on its total dry weight, dough can comprise on a dry basis a total content of sugar ingredients, polyol ingredients going from 5 to 50%, or from 10 to 45% or from 20 to 40%.

Preferably, based on its total dry weight, dough can comprise on a dry basis a total content of sugar ingredients, polyol ingredients and dietary fiber ingredients going from 5 to 65%, or from 10 to 60% or from 25 to 50%.

Preferably, the dough does not comprise any animal-based protein, preferably any animal-based ingredient. In a preferred embodiment, the dough comprises on a dry basis a total content of protein hydrolysate other than pea hydrolysate lower than 10% based on its total dry weight, advantageously lower than 5%. Preferably, the dough does not comprise any protein hydrolysate other than the pea protein hydrolysate.

Generally, the dough has a water content going from 5 to 30%, preferably from 8 to 20%. Preferably, the dough comprises as an ingredient sugars syrup, polyols syrup or dietary fibers syrup which will easily bring water to the dough without addition of water. Syrups are concentrated aqueous solutions and may have a dry matter going from 60 to 85%. Water or any kind of edible aqueous solutions may also be ingredients added to the dough.

Generally, the water activity (Aw) at 20°C of the dough after manufacturing is 0.650 or below, for example from 0.500 to 0.650.

The quantities of the pea protein hydrolysate and of the plant protein component may be selected so that the dough comprises, based on the total weight of the dough, from 25 to 60 wt.% of protein N6.25, preferably from 30 to 50 wt.%, for example from 35 to 45%. Even with these high quantities of protein present, the dough can have great and soft texture, without too much hardening during time.

It has been demonstrated that after 7 days of storage at room temperature (20°C ± 2°C), this dough may have a hardness between 2 and 100 N, preferably between 5 and 50 N, as measured by a texture analyser. Moreover, the hardness of this dough may not increase of more than 100N, preferably of more than 60N, after 1 month of storage at room temperature (20°C ± 2°C). In other words, the difference between the hardness at 30 days and the hardness at 7 days is below 100N, preferably below 60N. More details regarding conditions used for texture analysis are included in the example section.

In one embodiment of the invention, the solid protein raw dough food product comprises inclusions such as for instance, nuts such as almonds, peanuts, walnuts, fruits, chocolate chips, puffed plant ingredients such as puffed cereals or puffed plant proteins extrudates. These puffed protein extrudates can be in the form of protein crisps, protein beads or protein nuggets; they may increase the quantity of protein N6.25 in the solid protein raw dough food product. For further clarification if needed, inclusions are not to be considered as ingredients of the dough: inclusions are solid particles that are partially or totally surrounded by the dough without being homogeneously dispersed therein.

In an embodiment, the solid protein raw dough food product is coated by a chocolate and/or caramel coating.

In the present invention, "chocolate coating" incorporates dark chocolate, milk chocolate, white chocolate, chocolate-like products such as compound chocolates and any kind of cocoa-based product mimicking the properties of couverture chocolate. "Chocolate coating" and "caramel coating" also incorporate coatings that do not comprise any animal-based protein, preferably any animal-based ingredient.

Solid protein raw dough food product according to the invention can generally comprise, based on the total weight of the food product, 0 to 40% of caramel and/or chocolate coating, 0 to 40% of inclusions and 20 to 100% of the dough.

Preferably, the solid protein raw dough food product has, based on the total weight of the food product, a protein N6.25 content that goes from 10 to 60%, for example from 15 to 45% or 25 to 40%.

Solid protein raw dough food product is generally a protein bar or a protein bite.

Preferably, the solid protein raw dough food product does not comprise any animal-based protein, preferably any animal-based ingredient.

Another aspect of the invention pertains to a process of manufacturing the solid protein raw dough food product of the invention that comprises the steps of:

- mixing the pea protein hydrolysate, the plant protein component and an aqueous solution until a dough is obtained;
- laminating the dough;
- shaping the laminated dough.

The process steps of the process of the invention are known from the skilled person.

The step of mixing can be done using any kind of dough mixer or kneader.

The mixing can comprise many different stages. For example, it can comprise a stage of mixing the ingredients in powder to form a homogenous powder. Mixing can also comprise a stage of mixing liquid ingredients eventually heated, such as oils, syrups, emulsifiers and other liquids such as liquid aromas. Mixing can comprise a stage of blending liquid ingredients and powder ingredients.

The laminating step is generally done by using laminating rollers or laminating roller machines.

The shaping step can be done by any known method, for example by cutting the laminated dough into pieces of desired shape (protein bar, protein bite...).

Optionally, the process of the invention comprises an additional step of incorporation of inclusions. In one embodiment, the incorporation of the inclusions is done during the step of mixing, preferably by addition of the inclusions into the dough at the end of the mixing step. In another embodiment the inclusions are put into contact of the laminated dough or shaped laminated dough and partially embedded into the dough by pressing.

Optionally, the process comprises a coating step with caramel and/or chocolate, for example. The coating step can be done immediately after obtaining the shaped raw dough or the shaped raw dough can then be kept a few hours before further processing if desired.

One other aspect of the invention is the use of a pea protein hydrolysate to stabilize hardening of a solid protein raw dough food product during time.

Another object of the invention is the use of a pea protein hydrolysate to improve the cohesion of a raw dough comprising a plant protein component chosen from plant protein isolates, plant protein concentrates and blends thereof. This means in the context of the invention that the different ingredients of the raw dough are bound in a stronger manner when adding the pea protein hydrolyzate in the dough, than compared to a similar dough in which pea protein hydrolyzate is replaced by the plant protein component. For example, this improvement has been demonstrated through Examples 1, 2 and 3 which are reported below in the Examples section.

Some non-limiting embodiments of the invention are now going to be described in the following example section.

**EXAMPLES**

**Example 1: Manufacture of dough bars**

Ingredients:

The following ingredients were used:

NUTRALYS® H85: Pea protein with a degree of hydrolysis DH of 18.5, Roquette Frères

Pea protein DH of 6.5: Pea protein with a degree of hydrolysis DH of 6.5 manufactured by enzymatic hydrolysis by ROQUETTE FRERES

NUTRALYS® S85XF: Pea protein isolate with a solubility at pH 7 of 60%, Roquette Frères

NUTRALYS® B85F: pea protein isolate with a solubility at pH 7 of 12%, Roquette Frères

Glucose-Fructose syrup 7081: Glucose-Fructose syrup 70DE, 81% of dry matter, Roquette Frères

Biscuitine™ 500: Vegetable fat, Loders Croklaan

NEOSORB® 70/70: sorbitol syrup, 70% of dry matter, Roquette Frères

Fat reduced cocoa powder alkalized

Salt

All protein ingredients (hydrolysates and isolates did have around 92%-93% of dry matter)

Recipes:

The raw doughs were prepared using the recipes in the Tables below; the protein content in the dough and the hardness over time of the protein bar obtained were also reported.

| Ingredients | Recipe 1 | Recipe 2 | Recipe 3 |
|---|---|---|---|
| Glucose-Fructose syrup 7081 | 21,36 | 21,36 | 21,36 |
| Pea protein DH of 6.5 | 0 | 0 | 11,1 |
| NUTRALYS® S85XF | 37 | 25,90 | 25,90 |
| NUTRALYS® H85 | 0 | 11,10 | 0 |
| NUTRALYS® B85F | 13,08 | 13,08 | 13,08 |
| Biscuitine™ 500 | 9,41 | 9,41 | 9,41 |
| NEOSORB® 70/70 | 16,50 | 16,5 | 16,5 |
| Fat reduced cocoa powder alkalized | 1,75 | 1,75 | 1,75 |
| Natural flavours | 0,70 | 0,70 | 0,70 |
| Salt | 0, 20 | 0, 20 | 0, 20 |
| Total | 100 | 100 | 100 |
| Protein content | 39.3 | 39.3 | 39.3 |
| Hardness D+7 | Impossible to shape | 21.4 | 48.9 |
| Hardness D+14 | Impossible to shape | 42 | 71.2 |
| Hardness D+30 | Impossible to shape | 59 | 85.4 |
| Hardness D+60 | Impossible to shape | 69.9 | 93.4 |

The protein content of the raw dough formulated with these recipes was around 40%. The water content of the raw dough formulated with these recipes was around 12%.

Process of preparation:

The method for the preparation of the raw dough was as follows:

1. In a VMI - SPI 11 LAB mixer, mix powders until obtaining a homogeneous blend.
2. Add vegetable fat, syrups, and liquids (melted together) in the VMI mixer bowl.
3. Mix 5 min at speed 1, then 15 min at speed 2 to obtain a homogeneous dough.
4. Laminate to 12mm with TEKNO STAMAP - LAM 500 roller and cut into bar shape (approx. 80mm length and 25mm width).

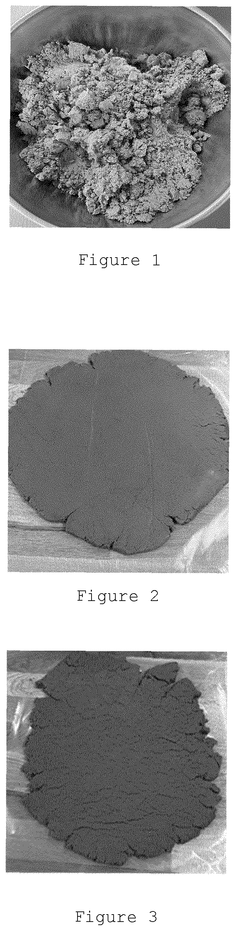

Pictures of the raw doughs just after rolling are reported in Figures 1 to 3.
Observations during mixing and rolling:

- Recipe 1 led to a dough without cohesion, quite crumbly and dry (Figure 1). It was not possible to laminate this dough and to obtain a bar with this recipe.
- Recipe 2 had a much better cohesion (Figure 2). It led to a homogeneous, non-sticky raw dough, smooth on the surface with a nice softness.
- Recipe 3 had an intermediate behaviour: it was cohesive and non-sticky, but some cracks appeared on the surface and the texture was harder (Figure 3).

## Example 2: Texture analysis

The hardness of the bars described in Example 1 is measured at different times of storage: after 7 days, 14 days and 30 days. The raw dough bar is stored without coating in a plastic box, to limit the water exchanges. However, the hardening in these conditions is quicker than what would be observed on the coated bar, individually wrapped.

The equipment used for the measurement is a texture analyzer Instron machine 5966, with a plate knife mobile of 40mm length and 2mm width. The value determined was the force in compression with parameters as follows:

- Pre-test speed: 10mm/min

- Test speed: 10 mm/min

- Post-test speed: 10mm/s

- Distance: 8 mm.

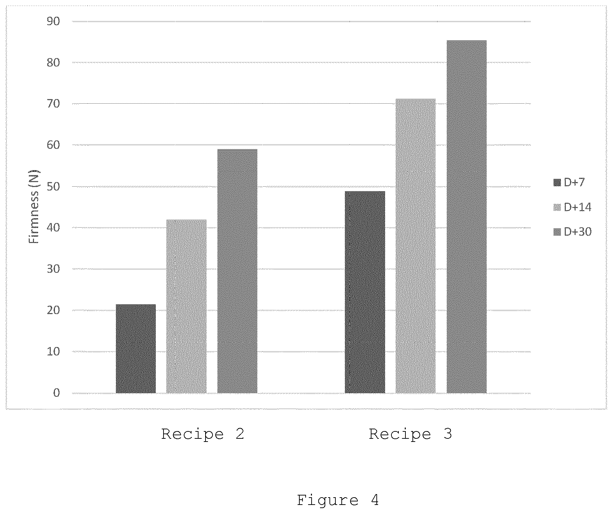

The graph of Figure 4 represents the evolution of bars firmness over shelf-life. It shows the results obtained with the hardness measurement of recipes 2 and 3. Recipe 1 was not cohesive enough to form bars and measure a hardness, which illustrates the advantage of using pea protein hydrolysate in a solid food raw dough product.

The results show that the use of NUTRALYS® H85 enables to reach the softest texture. Hardness is limited already at the beginning of shelf-life (7 days) and it remains so even up to 30 days. The hardness value remains below 60 N at that time.

## Example 3: Other recipes tested

Additional embodiments were tested using the same process for manufacturing the protein bars but using different recipes.

Other ingredients used were:

- NUTRALYS® W: Wheat protein hydrolysate (ROQUETTE FRERES)
- NUTRALYS® RICE I850XF (ROQUETTE FRERES): Rice protein isolate with a solubility at pH 7 of 10-20%
- Collagen hydrolysate
- Glycerol

The details of the different recipes, the protein content in the dough and the hardness over time of the protein bar obtained were reported in the Tables below.

Observations:

The protein bars of all recipes comprising pea protein hydrolysates were easy to process (except the bar of recipe 5 which was slightly sticky to the roll during the lamination).

The taste was acceptable for all protein bars comprising pea protein hydrolysates, even though the protein bars comprising high quantities of protein hydrolysates such as the ones of recipes 4 to 6 were found more bitter than the other recipes.

Even though it was possible to obtain a protein bar with a good shape even when the dry weight of pea protein hydrolysate on the total dry weight of pea protein hydrolysate and plant protein component was very low, e.g. 10% (recipe 5), it was also noted that the texture may become improved when the dry weight of pea protein hydrolysate on the total dry weight of pea protein hydrolysate and plant protein component was higher than 10%, e.g. from 15 to 50% or 15 to 35%.

It was also observed that the protein bars of the invention comprising a plant protein component which is a blend of insoluble and soluble proteins had good texture. Surprisingly, the proteins bars with a protein component being a blend of insoluble and soluble proteins with a quantity of insoluble proteins higher than 30% (preferably from 35 to 50%) based on the total dry weight of the protein component was found softer than the protein bars with lower content of insoluble proteins. This phenomenon was strongly noticed with the protein bars of recipe 14 and 18 that had texture similar to the protein bar comprising collagen hydrolysate.

Recipes 15 and 16 are free of pea protein hydrolysates and are comparative examples. Recipe 15 comprised wheat protein hydrolysate instead of pea protein hydrolysates. The protein bar was much more difficult to shape than the protein bars comprising pea protein hydrolysates and, when the protein bar was formed, it differed from protein bars comprising pea protein hydrolysates in that it comprised much more cracks and was very brittle.

Recipe 16 comprised a collagen hydrolysate instead of pea protein hydrolysates. The protein bar had good texture and hardness. However, in addition to an animal origin which can be problematic for some final consumers, these protein hydrolysates may be expensive.

Recipes with rice protein hydrolysates are not reported in the Tables below due to the well-known strong bitter taste of these protein hydrolysates that make the taste not acceptable for the consumer.

| Ingredients | Rec. 4 | Rec. 5 | Rec. 6 | Rec. 7 | Rec. 8 | Rec. 9 | Rec. 10 | Rec. 11 |
|---|---|---|---|---|---|---|---|---|
| LYCASIN® 80/55 | 21.36 | 21.36 | 21.36 | | | | | |
| Glue-Fructose syrup | | | | 21.36 | 18.36 | 18.36 | 11.36 | 21.36 |
| Pea protein DH of 6.5 | 18.5 | 18.5 | 25.9 | | | | | |
| NUTRALYS® PEA S85XF | | | | 32 | 28 | 28 | 28 | 25.9 |
| NUTRALYS® W | 18.5 | | | | | | | |
| NUTRALYS® PEA H85 | | 18.5 | 11.1 | 5 | 12 | 17 | 12 | 11.1 |
| NUTRALYS® PEA B85F | | | | 13.08 | 13.08 | 8.08 | 13.08 | 13.08 |
| NUTRALYS® RICE I850XF | 13.08 | 13.08 | 13.08 | - | - | - | - | - |
| Biscuitine™ 500 | 9.41 | 9.41 | 9.41 | 9.41 | 9.41 | 9.41 | 9.41 | 9.41 |
| Glycerol | 16.5 | 16.5 | 16.5 | 0 | 0 | 0 | 0 | 16.5 |
| NEOSORB® 70/70 | 0 | 0 | 0 | 16.5 | 16.5 | 16.5 | 23.5 | 0 |
| cocoa powder | 1.75 | 1.75 | 1.75 | 1.75 | 1.75 | 1.75 | 1.75 | 1.75 |
| Natural flavours | 0.7 | 0.7 | 0.7 | 0.7 | 0.7 | 0.7 | 0.7 | 0.7 |
| Salt | 0.2 | 0.2 | 0.2 | 0.2 | 0.2 | 0.2 | 0.2 | 0.2 |
| Total | 100 | 100 | 100 | 100 | 100 | 100 | 100 | 100 |
| protein content | 39.9 | 39.5 | 39.8 | 39.3 | 41.4 | 41.3 | 41.4 | 39.1 |
| Hardness D+7 | 19.1 | 15.9 | 19.7 | 31.2 | 17.7 | 23.2 | 33.1 | 39.4 |
| Hardness D+14 | 26.6 | 18.4 | 26.2 | 40.1 | 20.8 | 41.5 | 58.0 | 29.1 |
| Hardness D+30 | 33.0 | 23.0 | 24.0 | 82.2 | 52.1 | 63.3 | 67.8 | 45.5 |
| Hardness D+60 | n.d. | n.d. | n.d. | 104.0 | 79.4 | 73.2 | 80.8 | 80.5 |
| Hardness D+100 | n.d. | n.d. | n.d. | n.d. | n.d. | n.d. | n.d. | 80.5 |

| Ingredients | Recipe 12 | Recipe 13 | Recipe 14 | Recipe 15 | Recipe 16 | Recipe 17 | Recipe 18 | Recipe 19 |
|---|---|---|---|---|---|---|---|---|
| Gluc-fructose syrup | 21.36 | 21.36 | 21.16 | 21.36 | 22.96 | 21.36 | 21.16 | 21.16 |
| Pea protein DH of 6.5 | - | - | - | - | - | - | - | - |
| NUTRALYS S85XF | 25.9 | 25.9 | 20.2 | 25.9 | 25.9 | 25.9 | 23.2 | 25.9 |
| NUTRALYS® W | - | - | - | 11.1 | - | - | - | - |
| NUTRALYS® H85 | 17 | 17 | 17 | - | - | 11.1 | 14 | 14 |
| Collagen hydrolysate | - | - | - | - | 9.5 | - | - | - |
| NUTRALYS B85F | 7.18 | 7.18 | 13.08 | 13.08 | 13.08 | 13.08 | 13.08 | 10.38 |
| Biscuitine™ 500 | 9.41 | 9.41 | 9.41 | 9.41 | 9.41 | 9.41 | 9.41 | 9.41 |
| Glycerol | 0 | 16.5 | 0 | 0 | 0 | 0 | 0 | 0 |
| NEOSORB® 70/70 | 16.5 | 0 | 16.5 | 16.5 | 16.5 | 16.5 | 16.5 | 16.5 |
| cocoa powder | 1.75 | 1.75 | 1.75 | 1.75 | 1.75 | 1.75 | 1.75 | 1.75 |
| Natural flavours | 0.7 | 0.7 | 0.7 | 0.7 | 0.7 | 0.7 | 0.7 | 0.7 |

(continued)

| Ingredients | Recipe 12 | Recipe 13 | Recipe 14 | Recipe 15 | Recipe 16 | Recipe 17 | Recipe 18 | Recipe 19 |
|---|---|---|---|---|---|---|---|---|
| Salt | 0.2 | 0.2 | 0.2 | 0.2 | 0.2 | 0.2 | 0.2 | 0.2 |
| Total | 100 | 100 | 100 | 100 | 100 | 100 | 100 | 100 |
| protein content | 39.0 | 39.0 | 39.1 | 39.3 | 39.2 | 39.1 | 39.2 | 39.2 |
| Hardness D+7 | 31.9 | 50.8 | 11.9 | 26.9 | 15.2 | n.d. | n.d. | n.d. |
| Hardness D+14 | 39.9 | 55.4 | 32.2 | 64.6 | 28.6 | 39.4 | 26.2 | 68.2 |
| Hardness D+30 | 52.6 | 71.8 | n.d. | n.d. | n.d. | 57.3 | 42.5 | 99.0 |
| Hardness D+60 | 82.7 | 93.5 | 51.0 | 89.2 | 41.3 | n.d. | n.d. | n.d. |
| Hardness D+100 | 82.7 | 93.5 | n.d. | n.d. | n.d. | n.d. | n.d. | n.d. |

**Claims**

1. Solid protein raw dough product wherein the dough of the product comprises a pea protein hydrolysate and a plant protein component chosen from plant protein isolates, plant protein concentrates and blends thereof and in which the dry weight of pea protein hydrolysate on the total dry weight of pea protein hydrolysate and plant protein component of the dough going from 10% to 80%.

2. Solid protein raw dough food product according to claim 1, wherein the dough comprises, based on the total weight of the dough, from 25 to 60 wt.% of protein N6.25, preferably from 30 to 50 wt.%.

3. Solid protein raw dough food product according to any of the preceding claims, wherein the dry weight of pea protein hydrolysate on the total dry weight of pea protein hydrolysate and plant protein component of the dough goes from 10 to 60%, or 15% to 50% or 15% to 35%.

4. Solid protein raw dough food product according to any of the preceding claims, wherein the pea protein hydrolysate has a degree of hydrolysis DH that goes from 5 to 25, advantageously from 11 to 22, preferably from 14 to 20.

5. Solid protein raw dough food product according to any of the preceding claims, wherein the plant of the plant protein component is chosen from pea, fava bean, soybean and rice, preferably pea.

6. Solid protein raw dough food product according to any of the preceding claims, wherein the plant protein component is a plant protein isolate or a blend of plant protein isolates.

7. Solid protein raw dough food product according to any of the preceding claims, wherein the plant protein component comprises at least one soluble plant protein isolate or concentrate and at least one insoluble plant protein isolate or concentrate, the soluble plant protein having a solubility at pH 7 higher than 25%, for example from 40 to 80%, the soluble plant protein having a solubility at pH 7 lower than 25%, for example from 10 to 20%.

8. Solid protein raw dough food product according to claim 7 wherein the total dry weight of soluble plant protein isolate or concentrate goes from 30% to 90% of the total dry weight of the plant protein component, for example from 50 to 80% or from 30 to 70% or from 50 to 65%.

9. Solid protein raw dough food product according to any of the preceding claims, wherein it is selected from protein bar or protein bite.

10. Solid protein raw dough food product according to any of the preceding claims, wherein the dough does not comprise any animal-based protein, preferably any animal-based ingredient.

11. Solid protein raw dough food product according to any of the preceding claims, wherein it comprises inclusions such as for instance, nuts such as almonds, peanuts, walnuts, fruits, chocolate chips, puffed plant ingredients such as puffed cereals or puffed plant proteins extrudates.

12. Solid protein raw dough food product according to any of the preceding claims, wherein it comprises, based on the total weight of the food product, 0 to 40% of caramel and/or chocolate coating, 0 to 40% of inclusions and 20 to 100% of the dough.

13. Solid protein raw dough food product according to any of the preceding claims wherein, based on the total weight of the dough, the dough has a water content going from 5 to 30%, preferably from 8 to 20%.

14. Process of manufacturing the solid protein raw dough food product according to any of the preceding claims comprising the steps of:

- mixing the pea protein hydrolysate, the plant protein component and an aqueous solution until a dough is obtained;
- laminating the dough;
- shaping the laminated dough.

15. Use of a pea protein hydrolysate to improve the cohesion of a raw dough comprising a plant protein component chosen from plant protein isolates, plant protein concentrates and blends thereof, the plant protein component being advantageously chosen from pea, fava bean, soybean and rice, preferably pea.

Figure 1

Figure 2

Figure 3

Figure 4

Europäisches
Patentamt

European
Patent Office

Office européen
des brevets

## EUROPEAN SEARCH REPORT

**Application Number**

EP 24 16 5045

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/126231 A1 (MERIT FUNCTIONAL FOODS CORP [CA]) 23 June 2022 (2022-06-23) * paragraphs [0033], [0070]; figure 4; example 2 * | 1-4,7-15 | INV. A23J1/14 A23J3/14 A23J3/18 A23J3/30 |
| X | WO 2023/158799 A1 (GLANBIA NUTRITIONALS LTD [IE]; DEMMERLY JASON [US]) 24 August 2023 (2023-08-24) * page 20, lines 3,4; table 12 * | 1,5,6, 10-12 | |
| A | DATABASE GNPD [Online] MINTEL; 24 May 2023 (2023-05-24), anonymous: "Caramel Nougat Choccy Bars", XP093198482, Database accession no. 10823968 * abstract * | 1-15 | |
| A | WO 2012/027287 A1 (ABBOTT LAB [US]; CORDLE CHRISTOPHER T [US] ET AL.) 1 March 2012 (2012-03-01) * paragraphs [0072], [0096], [0097]; claim 1 * | 1-15 | TECHNICAL FIELDS SEARCHED (IPC) |
| A | US 7 399 496 B2 (GLANBIA NUTRITIONALS IRELAND L [IE]) 15 July 2008 (2008-07-15) * examples 6-8 * | 1-15 | A23J |

The present search report has been drawn up for all claims

| Place of search | Date of completion of the search | Examiner |
|---|---|---|
| The Hague | 23 September 2024 | Galleiske, Anke |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 559 320 A1**

## ANNEX TO THE EUROPEAN SEARCH REPORT
## ON EUROPEAN PATENT APPLICATION NO.

EP 24 16 5045

23-09-2024

| Patent document cited in search report | Publication date | Patent family member(s) | Publication date |
|---|---|---|---|
| WO 2022126231 A1 | 23-06-2022 | NONE | |
| WO 2023158799 A1 | 24-08-2023 | NONE | |
| WO 2012027287 A1 | 01-03-2012 | TW 201212828 A<br>WO 2012027287 A1 | 01-04-2012<br>01-03-2012 |
| US 7399496 B2 | 15-07-2008 | US 2004156969 A1<br>WO 2004071207 A1 | 12-08-2004<br>26-08-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015094342 A1
- US 7399496 B
- US 20210177030 A1